# EUROPÄISCHE PATENTSCHRIFT

(11) **EP 1 937 742 B1**
(45) Veröffentlichungstag und Bekanntmachung des Hinweises auf die Patenterteilung: **18.04.2012**
(21) Anmeldenummer: 06777194.9
(22) Anmeldetag: 22.09.2006
(51) Int. Cl.: C08G 18/38, C08G 18/78, C08G 18/10, C08G 18/48, C09D 175/02, C09D 175/12

(54) **ZWEIKOMPONENTEN-SYSTEME FÜR DIE HERSTELLUNG FLEXIBLER BESCHICHTUNGEN**
TWO-COMPONENT SYSTEMS FOR PRODUCING FLEXIBLE COATINGS
SYSTEME A DEUX COMPOSANTS POUR PRODUIRE DES REVETEMENTS FLEXIBLES

(30) Priorität: 04.10.2005 DE 102005047562
(43) Veröffentlichungstag der Anmeldung: 02.07.2008
(73) Patentinhaber: Bayer MaterialScience AG, 51368 Leverkusen (DE)
(72) Erfinder: MAGER, Michael, 51375 Leverkusen (DE); NIESTEN, Meike, 51061 Köln (DE); HOMANN, Malte, 51519 Odenthal (DE)
(86) Internationale Anmeldenummer: PCT/EP2006/009203
(87) Internationale Veröffentlichungsnummer: WO 2007/039133

(56) Entgegenhaltungen:
- EP-A1- 0 000 194
- EP-A1- 0 959 087
- EP-A2- 0 403 921
- WO-A-2004/033517
- DE-A1- 19 644 932
- DE-A1- 19 858 818
- US-B1- 6 183 870
- DUSEK KAREL ET AL: "Network formation of polyurethanes due to side reactions", MACROMOLECULES, AMERICAN CHEMICAL SOCIETY, WASHINGTON, DC; US, vol. 23, no. 6, 19 March 1990 (1990-03-19) , pages 1774-1781, XP009145239, ISSN: 0024-9297

## Beschreibung

Die vorliegende Erfindung betrifft Zweikomponenten-Beschichtungssysteme für die Herstellung von flexiblen Beschichtungen. Die Beschichtungssysteme umfassen Polyurethanprepolymere mit Allophanatstrukturen sowie aminofunktionelle Polyasparaginsäureester als Härter.

Zweikomponenten-Beschichtungssysteme auf Polyurethan- oder Polyharnstoff-Basis sind bekannt und werden in der Technik eingesetzt. In der Regel enthalten sie eine flüssige Polyisocyanatkomponente und eine flüssige isocyanatreaktive Komponente. Durch Reaktion von Polyisocyanaten mit Aminen als isocyanatreaktive Komponente entstehen stark vernetzte Polyharnstoff-Beschichtungen. Primäre Amine und Isocyanate reagieren jedoch meistens sehr schnell miteinander. Typische Topf- oder Gelierzeiten betragen oft nur einige Sekunden bis wenige Minuten. Deshalb können solche Polyharnstoff- Beschichtungen nicht manuell, sondern nur mit speziellen Spritzapparaturen appliziert werden. Solche Beschichtungen besitzen jedoch ausgezeichnete physikalische Eigenschaften.

Eine aus der Literatur bekannte Methode, die Reaktivität zu reduzieren, ist die Verwendung von Prepolymeren mit niedrigen NCO-Gehalt. Durch den Einsatz von NCO-funktionellen Prepolymeren in Kombination mit Aminen können flexible Polyharnstoffbeschichtungen hergestellt werden.

US-A 3 428 610 und US-A 4 463 126 offenbaren die Herstellung von Polyurethan/ PolyharnstoffElastomeren durch Aushärtung von NCO-funktionellen Prepolymeren mit aromatischen Diaminen. Bevorzugt sind dies di-primäre aromatische Diamine, welche in ortho-Position zu jeder Aminogruppe mindestens einen Alkylsubstituenten mit 2-3 Kohlenstoffatomen und gegebenenfalls außerdem in weiteren ortho-Positionen zu den Aminogruppen Methylsubstituenten aufweisen, wie zum Beispiel Diethyltoluyldiamin (DETDA).

US-A 4 463 126 beschreibt ein Verfahren zur Herstellung von lösemittelfreien elastischen Beschichtungen, bei dem auf Isophorondiisocyanat (IPDI) und Polyetherpolyolen basierende NCO-Prepolymere bei Raumtemperatur mit sterisch gehinderten di-primären aromatischen Diaminen ausgehärtet werden.

Von Nachteil ist bei solchen Systemen, dass die aromatischen Diamine zu starker Vergilbung neigen.

Eine weitere Möglichkeit, die Reaktion zwischen Polyisocyanaten und Aminen zu verzögern, ist die Verwendung von sekundären Aminen. EP-A 403 921 und US-A 5 126 170 offenbaren die Bildung von Polyharnstoff-Beschichtungen durch Reaktion von Polyasparaginsäureestern mit Polyisocyanaten. Polyasparaginsäureester besitzen eine niedrige Viskosität und eine verringerte Reaktivität gegenüber Polyisocyanaten und können daher zur Herstellung lösemittelfreier Beschichtungsmittel mit verlängerten Topfzeiten eingesetzt werden. Zusätzlicher Vorteil von Polyasparaginsäureestern ist, dass die Produkte farblos sind.

Farblose, aliphatische Polyisocyanatprepolymere auf Basis von Polyetherpolyolen härten hingegen extrem langsam mit Polyasparaginsäurcestern und die Beschichtungen besitzen oft eine klebrige Oberfläche.

Aus der WO 2004/033517 ist die Herstellung von elastischen Beschichtungen auf Basis von Asparaginsäureestem und Prepolymeren bekannt geworden, jedoch enthalten diese keine Allophanat-Strukturen.

Die EP-A 0 959 087 beschreibt die Herstellung wasserdispergierbarer Polyisocyanate durch den Einbau von Polyetherketten. Als besonders wirksam erwies sich dabei die Anbindung der Polyether über Allophanatfunktionen, die vorzugsweise mit Hilfe von Zink-Katalysatoren erhalten werden.

Auch die DF-A19 858 818 nutzt diesen Ansatz zur Hydrophilierung, jedoch um wässrige 2K-Bindemittelkombinationen für wässrige Spachtelmassen herzustellen.

Die Kombination von Allophantgruppen und Polyetherketten als Hydrophilierungsmittel ist jedoch nicht Gegenstand der vorliegenden Erfindung.

Aufgabe der vorliegenden Erfindung war es daher nun zweikomponentige Beschichtungsmittel zur Herstellung von Polyharnstoffbeschichtungen bereitzustellen, die ausreichend lange Topfzeiten aufweisen, um auch eine manuelle Applikation zu ermöglichen und mit denen sich klare gleichzeitig farblose, flexible Beschichtungen mit guten anwendungstechnischen Daten wie Elastizität und Härte

Gelöst wurde diese Aufgabe nun durch die Kombination spezieller Allophanatpolyisocyanate mit Polyasparaginsäureestern.

Gegenstand der Erfindung sind daher Zweikomponenten-Beschichtungssysteme, wenigstens enthaltend
A) ein über Allophanatgruppen gebundene Polyethergruppen aufweisendes PolyisocyanatPrepolymer mit einem zählenmittleren Molekulargewicht von 700 bis 50.000 g/mol, einer Viskosität bei 23°C von 500 bis 100.000 mPas, der allgemeinen Formel (II), 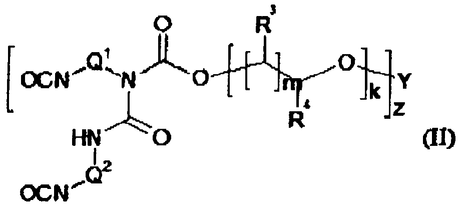 worin
   - Q¹ und Q²: unabhängig voneinander der Rest eines linearen und/oder cyclischen aliphatischen Diisocyanats sind,
   - R³ und R⁴: unabhängig voneinander Wasserstoff oder ein C₁-C₄-Alkyltest sind, wobei R³ und R⁴ bevorzugt Wasserstoff und/oder Methylgruppen sind und in jeder Wiederholungseinheit k die Bedeutung von R³ und R⁴ verschieden sein kann,
   - Y: der Rest eines Polyhydroxy-Starter-Moleküls einer Funktionalität von 2 bis 6, das mindestens ein Polyetherpolyol enthält, ist und somit
   - z: eine Zahl von 2 bis 6 ist, welche bei Verwendung von verschiedenen Starter-Molekülen keine ganze Zahl sein muss, sowie
   - k: bevorzugt so vielen Monomereinheiten entspricht, dass das zahlenmittlere Molekulargewicht des der Struktur zugrunde liegenden Polyethers 300 bis 20.000 g/mol beträgt und
   - m: 1 oder 3 ist,
   welche erhalten werden, indem
   A1) ein oder mehrere aliphatische und/oder cycloaliphatische Polyisocyanate mit
   A2) einer oder mehreren Polyhydroxyverbindungen, wobei wenigstens eine ein Polyetherpolyol ist,
   zu einem NCO-funktionellen Polyurethan-Prepolymer umgesetzt werden und dessen so gebildete Urethangruppen dann anschließend unter Zugabe von
   A3) Polyisocyanaten, welche verschieden von denen aus A1) sein können und
   A4) Katalysatoren und
   A5) gegebenenfalls Stabilisatoren teilweise oder vollständig allophanatisiert werden,
   und
B) aminofunktionellen Polyasparaginsäureester der allgemeinen Formel (I) 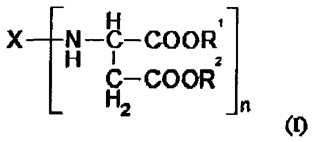 in der
   - X: für einen n-wertigen organischen Rest steht, der durch Entfernung der primären Aminogruppen eines n-wertigen Polyamins erhalten wird,
   - R¹, R²: für gleiche oder verschiedene organische Reste stehen, die unter den Reaktionsbedingungen gegenüber Isocyanatgruppen inert sind und
   - n: für eine ganze Zahl von mindestens 2 steht.

Beispiele für geeignete aliphatische und cycloaliphatische Polyisocyanate A1) sind Di- oder Triisocyanate wie Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie 4,4'-Methylenbis(cyclohexylisocyanat), 3,5,5-Trimethyl-1-isocyanatoo-3-isocyanatomethylcyclohexan (Isophorondiisocyanat IPDI) sowie ω.ω'-Diisocyanato-1,3-dimethyleyclohexan (H₆XDI).

Bevorzugt werden in den Komponenten A1) und A3) Hexandiisocyanat (Hexamethylendiisocyanat, HDI), 4,4'-Methylenbis(cyclohexylisocyanat) und/oder 3,5,5-Trimethyl-1-isocyanato-3-isocyanatomethylcyclohexan (isophorondiisocyanat, IPDI) als Polyisocyanate eingesetzt. Ein ganz besonders bevorzugtes Polyisocyanat ist HDI.

Bevorzugt werden in A1) und A3) Polyisocyanate des gleichen Typs eingesetzt.

Als Polyhydroxyverbindungen der Komponente A2) können alle dem Fachmann bekannten Polyhydroxyverbindungen eingesetzt werden, welche bevorzugt eine mittlere OH-Funktionalitä von größer oder gleich 1,5 aufweisen, wobei wenigstens eine der in A2) enthaltenen Verbindungen ein Polyetherpolyol sein muss.

Geeignete in A2) einsetzbare Polyhydroxyverbindungen sind niedermolekulare Diole (z.B. 1,2-Ethandiol, 1,3- bzw. 1,2 Propandiol, 1,4-Butandiol), Triole (z.B. Glycerin, Trimethylolpropan) und Tetraole (z.B- Pentaerythrit), Polyetherpolyole, Polyesterpolyole, Polycarbonatpolyole sowie Polythioetherpolyole. Bevorzugt werden in A2) ausschließlich als Polyhydroxyverbindungen Substanzen der vorstehend genannten Art auf Polyetherbasis eingesetzt.

Bevorzugt weisen die in A2) eingesetzten Polyetherpolyole zahlenmittlere Molekulargewichte Mₙ von 300 bis 20.000 g/mol, besonders bevorzugt 1000 bis 12000 g/mol, ganz besonders bevorzugt 2.000 bis 6.000 g/mol auf.

Ferner besitzen sie bevorzugt eine mittlere OH-Funktionalität von ≥ 1,9, besonders bevorzugt ≥ 1,95.

Solche Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich.

Besonders geeignete Polyetherpolyole der Komponente A2) sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69).

Derartige Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Dies ist z.B. in der US-A 5 158 922 (z.B. Beispiel 30) und EP-A 0 654 302 (S. 5, Z. 26 bis S. 6, Z. 32) beschrieben.

Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3- und Butandiyl-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehende beispielhafte genannten Art oder niedermolekulare Ethoxylierungs- oder Propoxylierungsprodukte derartiger einfacher Polyole oder beliebige Gemische derartiger modifizierter oder nicht modifizierter Alkohole.

Die Herstellung der isocyanatgruppenhaltigen Polyurethanprepolymere als Zwischenstufe erfolgt durch Umsetzung der Polyhydroxyverbindungen der Komponente A2) mit überschüssigen Mengen der Polyisocyanate aus A1). Die Umsetzung erfolgt im Allgemeinen bei Temperaturen von 20 bis 140°C, bevorzugt bei 40 bis 100°C, gegebenenfalls unter der Verwendung von aus der Polyurethanchemie an sich bekannten Katalysatoren wie beispielsweise Zinn-Seifen, z.B. Dibutylzinndilaurat, oder tertiären Aminen, z.B. Triethylamin oder Diazabicyclooctan.

Die Allophanatisierung erfolgt dann anschließend durch Umsetzung der isocyanatgruppenhaltigen Polyurethanprepolymere mit Polyisocyanaten A3), welche gleich oder verschieden zu denen der Komponente A1) sein können, wobei geeignete Katalysatoren A4) zur Allophanatisierung zugesetzt werden. Typischerweise werden anschließend zur Stabilisierung die sauren Additive der Komponente A5) zugesetzt und überschüssiges Polyisocyanat, z.B. durch Dünnschichtdestillation oder Extraktion aus dem Produkt entfernt.

Das Molverhältnis der OH-Gruppen der Verbindungen der Komponente A2) zu den NCO-Gruppen der Polyisocyanate aus A1) und A3) beträgt bevorzugt 1 : 1,5 bis 1 : 20, besonders bevorzugt 1 : 2 bis 1 : 15, ganz besonders bevorzugt 1 : 2 bis 1 : 10.

Bevorzugt werden in A4) als Katalysatoren Zink(II)-Verbindungen eingesetzt, wobei dies besonders bevorzugt Zink-Seifen längerkettiger, verzweigter oder unverzweigter, aliphatischer Carbonsäuren sind. Bevorzugte Zink(II)-Seifen sind solche auf Basis von 2-Ethylhexansäure sowie den linearen, aliphatischen C₄- bis C₃₀-Carbonsäuren. Ganz besonders bevorzugte Verbindungen der Komponente A4) sind Zn(II)bis(2-ethylhexanoat), Zn(II)bis(n-oktoat), Zn(II)bis(stearat) oder deren Mischungen.

Diese Allophanatisierungskatalysatoren werden typischerweise in Mengen von 5 ppm bis zu bis 5 Gew.-%, bezogen auf die gesamte Reaktionsmischung, eingesetzt. Bevorzugt werden 5 bis 500 ppm des Katalysators, besonders bevorzugt 20 bis 200 ppm, eingesetzt.

Gegebenenfalls können vor, während oder nach der Allophanatisierung auch stabilisierend wirkende Zusätze verwendet werden. Dies können saure Additive wie Lewis-Säuren (Elektronenmangelverbindungen) oder Broenstedt-Säuren (Protonensäuren) oder solche Verbindungen sein, welche unter Reaktion mit Wasser derartige Säuren freisetzen.

Dies sind beispielsweise anorganische oder organische Säuren oder auch neutrale Verbindungen wie Säurehalogenide oder Ester sein, welche mit Wasser zu den entsprechenden Säuren reagieren. Genannt seien hier insbesondere Salzsäure, Phosphorsäure, Phosphorsäureester, Benzoylchlorid, Isophtalsäuredichlorid, p-Toluolsulfonsäure, Ameisensäure, Essigsäure, Dichloressigsäure und 2-Chlorpropionsäure.

Die vorgenannten sauren Additive können auch zur Deaktivierung des Allophanatisierungskatalysators eingesetzt werden. Sie verbessern darüber hinaus die Stabilität der erfindungsgemäß hergestellten Allophanate, z.B. bei thermischer Belastung während der Dünnschichtdestillation oder auch nach der Herstellung bei Lagerung der Produkte.

Die sauren Additive werden in der Regel mindestens in einer solchen Menge zugegeben, dass das Molverhältnis der sauren Zentren des sauren Additivs und des Katalysators mindestens 1:1 beträgt. Vorzugsweise wird jedoch ein Überschuss des sauren Additivs zugesetzt.

Sofern überhaupt saure Additive verwendet werden sind dies bevorzugt organische Säuren wie Carbonsäuren oder Säurehalogenide wie Benzoylchlorid oder Isophtalyldichlorid.

Soll überschüssiges Diisocyanat abgetrennt werden, ist die Dünnschichtdestillation das bevorzugte Verfahren und wird in der Regel bei Temperaturen von 100 bis 160 °C und einem Druck von 0,01 bis 3 mbar durchgeführt. Der Restmonomergehalt beträgt danach bevorzugt weniger als 1 Gew.-%, besonders bevorzugt weniger als 0,5 Gew.-% (Diisocyanat).

Die gesamten Verfahrensschritte können gegebenenfalls in Anwesenheit inerter Lösungsmittel durchgeführt werden. Als inerte Lösungsmittel sind dabei solche zu verstehen, die unter den gegebenen Reaktionsbedingungen nicht mit den Edukten reagieren. Beispiele sind Ethylacetat, Butylacetat, Methoxypropylacetat, Methylethylketon, Methylisobutylketon, Toluol, Xylol, aromatische oder (cyclo-) aliphatische Kohlenwasserstoffgemische oder beliebige Gemische derartiger Lösungsmittel. Bevorzugt werden die erfindungsgemäßen Umsetzungen jedoch lösemittelfrei durchgeführt.

Die Zugabe der beteiligten Komponenten kann sowohl bei der Herstellung der isocyanatgruppenhaltigen Prepolymere als auch bei Allophanatisierung in beliebiger Reihenfolge erfolgen. Bevorzugt ist jedoch die Zugabe des Polyetherpolyols A2) zum vorgelegten Polyisocyanat der Komponenten A1) und A3) und schließlich die Zugabe des Allophanatisierungskatalysators A4).

In einer bevorzugten Ausführungsform der Erfindung werden die Polyisocyanate der Komponenten A1) und A3) in einem geeigneten Reaktionsgefäß vorgelegt und, gegebenenfalls unter Rühren, auf 40 bis 100°C erwärmt. Nach Erreichen der gewünschten Temperatur werden unter Rühren dann die Polyhydroxyverbindungen der Komponente A2) zugegeben und solange gerührt, bis der theoretische NCO-Gehalt des nach der gewählten Stöchiometrie zu erwartenden Polyurethanprepolymers erreicht oder geringfügig unterschritten ist. Jetzt wird der Allophanatisierungskatalysator A4) zugegeben und die Reaktionsmischung solange auf 50 und 100°C erwärmt, bis der gewünschte NCO-Gehalt erreicht oder geringfügig unterschritten ist. Nach Zugabe von sauren Additiven als Stabilisatoren wird das Reaktionsgemisch abgekühlt oder direkt der Dünnschichtdestillation zugeführt. Dabei wird das überschüssige Polyisocyanat bei Temperaturen von 100 bis 160°C und einem Druck von 0,01 bis 3 mbar bis auf einen Restmonomergehalt von weniger als 1 %, bevorzugt weniger als 0,5 %, abgetrennt. Nach der Dünnschichtdestillation kann gegebenenfalls weiterer Stabilisator zugegeben werden.

Solche in den beanspruchten Zweikomponenten-Beschichtungssystemen eingesetzte Allophanate entsprechen typischerweise der allgemeinen Formel (II), 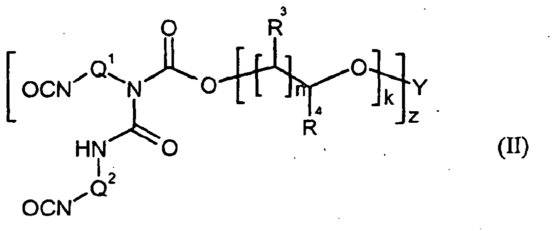 worin
- Q¹ und Q²: unabhängig voneinander der Rest eines linearen und/oder cyclischen aliphatischen Diisocyanats der genannten Art, bevorzugt -(CH₂)₆-, sind,
- R³ und R⁴: unabhängig voneinander Wasserstoff oder ein C₁-C₄-Alkylrest sind, wobei R³ und R⁴ bevorzugt Wasserstoff und/oder Methylgruppen sind und in jeder Wiederholungseinheit k die Bedeutung von R³ und R⁴ verschieden sein kann,
- Y: der Rest eines Starter-Moleküls der genannten Art mit einer Funktionalität von 2 bis 6 ist, und somit
- z: eine Zahl von 2 bis 6 ist, welche durch Verwendung von verschiedenen Starter-Molekülen selbstverständlich auch keine ganze Zahl sein muss, sowie
- k: bevorzugt so vielen Monomereinheiten entspricht, dass das zahlenmittlere Molekulargewicht des der Struktur zugrunde liegenden Polyethers 300 bis 20.000 g/mol beträgt und
- m: 1 oder 3 ist.

Vorzugsweise werden Allophanate erhalten, welche der allgemeinen Formel (III) entsprechen, 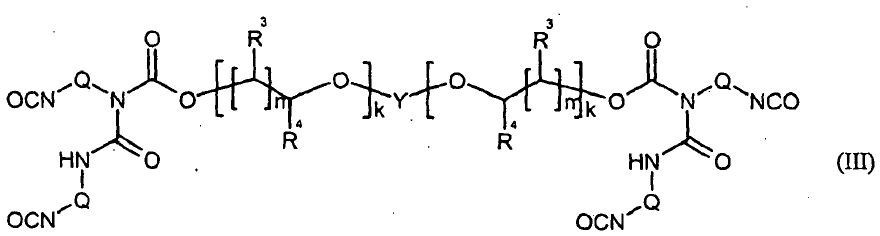 worin
- Q: für den Rest eines linearen und/oder cyclischen aliphatischen Diisocyanats der genannten Art, bevorzugt -(CH₂)₆-, steht,
- R³ und R⁴: unabhängig voneinander für Wasserstoff oder für einen C₁-C₄-Alkylrest stehen, wobei R³ und R⁴ bevorzugt Wasserstoff und/oder Methylgruppen sind wobei in jeder Wiederholungseinheit m die Bedeutung von R³ und R⁴ verschieden sein kann,
- Y: für den Rest eines difunktionellen Starter-Moleküls der genannten Art steht und
- k: so vielen Monomereinheiten entspricht, dass das zahlenmittlere Molekulargewicht des der Struktur zugrunde liegenden Polyethers 300 bis 20.000 g/mol beträgt und
- m: gleich 1 oder 3 ist.

Da zur Herstellung der Allophanate der Formel (II) und (III) in der Regel Polyole auf Basis von polymerisiertem Ethylenoxid, Propylenoxid oder Tetrahydrofuran eingesetzt werden, so ist in den Formeln (II) und (III) im Falle von m = 1 besonders bevorzugt wenigstens ein Rest von R³ und R⁴ Wasserstoff, im Falle von m = 3 sind R³ und R⁴ Wasserstoff.

Die erfindungsgemäß in A) eingesetzten Allophanate haben typischerweise zahlenmittlere Molekulargewichte von 700 bis 50.000 g/mol, bevorzugt 1500 bis 8.000 g/mol und besonders bevorzugt 1.500 bis 4.000 g/mol.

Die erfindungsgemäß in A) eingesetzten Allophanate haben typischerweise Viskositäten bei 23°C von 500 bis 100.000 mPas, bevorzugt 500 bis 50.000 mPas und besonders bevorzugt von 1.000 bis 7.500 mPas, ganz besonders bevorzugt von 1.000 bis 3.500 mPas.

Die Gruppe X in Formel (I) der Polyasparaginsäureester der Komponente B) basiert bevorzugt auf einem n-wertigen Polyamin ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4-und/oder 2,4,4-Trimethyl-1,6-diaminohexan, 1,11-Diaminoundecan, 1,12-Diaminododecan, 1-Amino-3,3,5-trimethyl-5-aminomethyl-cyclohexan, 2,4-und/oder 2,6-Hexahydrotoluylendiamin, 2,4'-und/oder 4,4'-Diamino-dicyclohexylmethan, 3,3'-Dimethyl-4,4'-diamino-dicyclohexylmethan, 2,4,4'-Triamino-5-methyl-dicyclohexylmethan und Polyetherpolyaminen mit aliphatisch gebundenen primären Aminogruppen mit einem zahlenmittleren Molekulargewicht Mₙ von 148 bis 6000 g/mol.

Besonders bevorzugt basiert die Gruppe X auf 1,4-Diaminobutan, 1,6-Diaminohexan, 2,2,4-und/oder 2,4,4-Trimethyl-1,6-diaminohexan, 1-Amino-3,3,5-trimethyl-5-aminomethyl-cyclohexan, 4,4'-Diamino-dicyclohexylmethan oder 3,3'-Dimethyl-4,4'-diamino-dicyclohexylmethan.

In Bezug auf die Reste R¹ und R² bedeutet "unter den Reaktionsbedingungen gegenüber Isocyanatgruppen inert", dass diese Reste keine Gruppen mit Zerewitinoff-aktivem Wasserstoff (CH-acide Verbindungen; vgl. Römpp Chemie Lexikon, Georg Thieme Verlag Stuttgart) wie OH, NH oder SH aufweisen.

Bevorzugt sind R¹ und R² unabhängig voneinander C₁ bis C₁₀-Alkylreste, besonders bevorzugt Methyl oder Ethylreste.

Für den Fall, dass X auf 2,4,4'-Triamino-5-methyl-dicyclohexylmethan basiert, sind bevorzugt R¹ = R² = Ethyl.

Bevorzugt ist n in Formel (I) eine ganze Zahl von 2 bis 6, besonders bevorzugt 2 bis 4.

Die Herstellung der aminofunktionellen Polyasparaginsäureester B) erfolgt in an sich bekannter Weise durch Umsetzung der entsprechenden primären Polyamine der Formel

X-[NH₂]ₙ

mit Malein- oder Fumarsäureestern der allgemeinen Formel

R¹OOC-CH=CH-COOR²

Geeignete Polyamine sind die oben als Basis für die Gruppe X genannten Diamine.

Beispiele geeigneter Malein- oder Fumarsäureester sind Maleinsäuredimethylester, Maleinsäurediethylester, Maleinsäuredibutylester und die entsprechenden Fumarsäureester.

Die Herstellung der aminofunktionellen Polyasparaginsäureester B) aus den genannten Ausgangsmaterialien erfolgt bevorzugt innerhalb des Temperaturbereichs von 0 bis 100°C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen.

In den erfindungsgemäßen Zweikomponenten-Beschichtungssystemen beträgt das Verhältnis von freien oder blockierten Aminogruppen zu freien NCO-Gruppen bevorzugt 0,5 : 1 bis 1,5 : 1, besonders bevorzugt 1:1 bis 1,5:1.

Zur Herstellung der erfindungsgemäßen Zweikomponenten-Beschichtungssystemen werden die Einzelkomponenten miteinander vermischt.

Die genannten Beschichtungsmittel können mit den an sich bekannten Techniken wie Sprühen, Tauchen, Fluten, Rollen, Streichen oder Gießen auf Oberflächen appliziert werden. Nach dem Ablüften gegebenenfalls vorhandener Lösungsmittel, härten die Beschichtungen dann bei Umgebungsbedingungen oder auch bei höheren Temperaturen von beispielsweise 40 bis 200°C.

Die genannten Beschichtungsmittel können beispielsweise auf Metalle, Kunststoffe, Keramik, Glas sowie Naturstoffe aufgebracht werden, wobei die genannten Substrate zuvor einer gegebenenfalls notwendigen Vorbehandlung unterzogen worden sein können.

### Beispiel:

Die Bestimmung der NCO-Gehalte erfolgte durch Rücktitration von im Überschuss zugesetztem Di-n-butylamin mit Salzsäure. Die Viskositäten wurden mit einem Rotationsviskosimeter der Firma Haake bei 23°C bestimmt.

Soweit nicht anders angegeben, beziehen sich alle Prozentangaben auf das Gewicht.

### Herstellung Prepolymer 1

Zu 2520,7 g 1,6-Hexandiisocyanat wurden zunächst 90 mg Isophtalsäuredichlorid gegeben, danach wurde die Mischung unter Rühren auf 100°C erwärmt. Nun wurden innerhalb von 3 Stunden 1978,5 g eines Polypropylenglycols zugegeben, welcher mittels DMC-Katalyse (Basen-frei) hergestellt worden war (Gehalt ungesättigter Gruppen < 0,01 meq/g, Molgewicht 2000 g/mol, OH-Zahl 56, theoretische Funktionalität 2). Die Reaktionsmischung wurde danach solange auf 100°C erwärmt, bis ein NCO-Gehalt von 26,1 % erreicht war. Nun wurde die Temperatur auf 90°C vermindert und die Reaktionsmischung nach Zugabe von 360 mg Zink(II)bis(2-ethylhexanoat) solange gerührt, bis der NCO-Gehalt bei 24,3 % lag. Nach Zugabe von 360 mg Isophtalsäuredichlorid würde das überschüssige 1,6-Hexandiisocyanat bei 0,5 mbar und 140°C mittels Dünnschichtdestillation entfernt.

Es wurde ein klares, farbloses Produkt mit einem NCO-Gehalt von 5,9 %, einer Viskosität von 2070 mPas (23°C) und einem Restgehalt an freiem HDI von < 0,03 % erhalten.

### Herstellung Prepolymer 2

Zu 1003,4 g 1,6-Hexandiisocyanat wurden zunächst 40 mg Isophtalsäuredichlorid gegeben, danach wurde die Mischung unter Rühren auf 100°C erwärmt. Nun wurden innerhalb von 3 Stunden 796,3 g eines Polytetramethylglycols (= Polytetrahydrofuran, Molgewicht 2000 g/mol, OH-Zahl 56, theoretische Funktionalität 2). Die Reaktionsmischung wurde danach solange auf 100°C erwärmt, bis ein NCO-Gehalt von 26,0 % erreicht war. Nun wurde die Temperatur auf 90°C vermindert und die Reaktionsmischung nach Zugabe von 140 mg Zink(II)bis(2-ethylhexanoat) solange gerührt, bis der NCO-Gehalt bei 24,2 % lag. Nach Zugabe von 140 mg Isophtalsäuredichlorid wurde das überschüssige 1,6-Hexandiisocyanat bei 0,5 mbar und 140°C mittels Dünnschichtdestillation entfernt.

Es wurde ein klares, farbloses Produkt mit einem NCO-Gehalt von 5,9 %, einer Viskosität von 17300 mPas (23°C) und einem Restgehalt an freiem HDI von 0,06 % erhalten.

### Herstellung Prepolymer 3

Zu 77,3 g 1,6-Hexandiisocyanat wurden zunächst 4 mg Isophtalsäuredichlorid gegeben, danach wurde die Mischung unter Rühren auf 100°C erwärmt. Nun wurden innerhalb von 3 Stunden 122,7 g eines Polypropylenglycols zugegeben, welcher mittels DMC-Katalyse (Basen-frei) hergestellt worden war (Gehalt ungesättigter Gruppen < 0,01 meq/g, Molgewicht 4000 g/mol, OH-Zahl 28, theoretische Funktionalität 2). Die Reaktionsmischung wurde danach solange auf 100°C erwärmt, bis ein NCO-Gehalt von 18,0 % erreicht war. Nun wurde die Temperatur auf 90°C vermindert und die Reaktionsmischung nach Zugabe von 20 mg Zink(II)bis(2-ethylhexanoat) solange gerührt, bis der NCO-Gehalt bei 16,7 % lag. Nach Zugabe von 20 mg Isophtalsäuredichlorid wurde das überschüssige 1,6-Hexandiisocyanat bei 0,7 mbar und 140°C mittels Dünnschichtdestillation entfernt.

Es wurde ein klares, farbloses Produkt mit einem NCO-Gehalt von 3,2 %, einer Viskosität von 3189 mPas (23°C) und einem Restgehalt an freiem HDI von < 0,03 % erhalten.

### Herstellung Prepolymer 4 (Vergleichsbeispiel)

Bei 100 °C wurden unter Rühren zu 321,4 g 1,6-Hexandiisocyanat innerhalb von 5 Stunden 378,4 g eines Polypropylenglykols zugegeben, welcher mittels DMC-Katalyse (basenfrei) hergestellt worden war (Gehalt ungesättigter Gruppen < 0,01 meq/g, Molgewicht 2000 g/mol, OH-Zahl 56, theoretische Funktionalität 2). Danach wurde die Mischung unter Rühren auf solange auf 100°C erwärmt, bis ein NCO-Gehalt von 20,7 % erreicht war. Nach Zugabe von 140 mg Dibutylphosphat wurde schließlich noch das überschüssige 1,6-Hexandiisocyanat bei 0,5 mbar und 140°C mittels Dünnschichtdestillation entfernt.

Es wurde ein klares, farbloses Produkt mit einem NCO-Gehalt von 3,15 %, einer Viskosität von 1596 mPas (23°C) und einem Restgehalt an freiem HDI von < 0,03 % erhalten.

### Allophanat 1 (Vergleichsbeispiel)

Es wurde ein auf einem primären Alkohol gestartetes Allophanat auf Basis HDI mit einem NCO-Gehalt von 19,7 % und einer Viskosität von 415 mPas (23°C) eingesetzt.

### Herstellung Polyasparaginsäureester 1

344 g (2 mol) Maleinsäurediethylester wurden bei 50°C unter Rühren zu 210 g (2 Äq.) 4,4'-Diaminodicyclohexylmcthan getropft. Nach vollständiger Zugabe ließ man 90 h bei 60°C unter N₂-Atmosphäre nachrühren und entwässerte während der letzten beiden Stunden bei 1 mbar. Es wurde ein flüssiges Produkt mit einem Äquivalentgewicht von 277 g erhalten.

### Herstellung Polyasparaginsäureester 2

344 g (2 mol) Maleinsäurediethylester wurden bei 50°C unter Rühren zu 238 g (2 Äq.) 3,3'-Dimethyl-4,4'-diaminodicyclohexylmethan getropft. Nach vollständiger Zugabe ließ man 90 h bei 60°C unter N₂-Atmosphäre nachrühren und entwässerte während der letzten beiden Stunden bei 1 mbar. Es wurde ein flüssiges Produkt mit einem Äquivalentgewicht von 291 g erhalten.

### Herstellung Beschichtungen

Die Prepolymere 1 und 2, sowie das Allophanat 1 (Vergleichsbeispiel) wurden bei Raumtemperatur mit den aminofunktionellen Polyasparaginsäureestern 1 bzw. 2 gemischt, wobei ein NCO/NH Verhältnis von 1,05 : 1 eingehalten wurde. Mit einem 150 µm Rakel wurden danach entsprechende Filme auf eine Glasplatte aufgetragen. Die Zusammensetzung und Eigenschaften der Beschichtungen sind in der Tabelle 1 zusammengefasst.

**Tabelle 1: Beispiele 1 bis 6 - Zusammensetzungen und Eigenschaften der Filme**

| **Beispiele** | **1** | **2** | **3** | **4** | **5** | **6** |
|---|---|---|---|---|---|---|
| Polyasparaginsäureester 1 [g] | 27,9 | - | 27,9 | - | 41,4 | |
| Polyasparaginsäureester 2 [g] | - | 29,0 | - | 29,0 | | 43,5 |
| Prepolymer 1 [g] | 70,0 | 70,0 | - | - | | |
| Prepolymer 2 [g] | - | - | 75,0 | 75,0 | | |
| Allophanat 1 [g] | | | | | 33,6 | 33,6 |
| NH:NCO | 1:1,05 | 1:1,05 | 1:1,05 | 1:1,05 | 1:1,05 | 1:1,05 |
| **Topfzeit** | 24 min | 5 h 10 min | 38 min | 6h 18 min | 10 min | 10 min |
| **Pendelhärte:** (150µm Nassfilm) | | | | | n.b. | n.b. |
| nach 7d | 32" | 40" | 49" | 56" | n.b. | n.b. |
| **Shorehärte D: DIN 53505** | | | | | n.b. | n.b. |
| nach 7d | 27 | 18 | 16 | 13 | n.b. | n.b. |
| **Zugfestigkeit ISO EN 527:** | | | | | n.b. | n.b. |
| Bruchspannung: (MPa) | 2,4 | 1,6 | 1,1 | 1,0 | n.b. | n.b. |
| Std.-Abw. | 0,3 | 0,01 | 0,1 | 0,06 | n.b. | n.b. |
| nominelle Bruchdehnung: (%) | 51,8 | 65,1 | 45,6 | 57,6 | n.b. | n.b. |
| Std.-Abw. | 11,5 | 5,5 | 4,7 | 4,8 | n.b. | n.b. |
| **Weiterreißversuche DIN 53515:** | | | | | n.b. | n.b. |
| (N/mm) | 3,3 | 2,3 | 1,9 | 1,5 | n.b. | n.b. |
| Std.-Abw. | 0,3 | 0,4 | 0,4 | 0,2 | n.b. | n.b. |

| | | | | | | |
|---|---|---|---|---|---|---|
| n.b. nicht bestimmt; Topfzeit ist die Zeit, innerhalb welcher die Zusammensetzungen noch zu einem Film verarbeitet werden konnte | | | | | | |

Die allophanatgruppenhaltigen Prepolymere 1 und 2 basieren auf den prinzipiell gleichen Bausteinen. Aufgrund ihrer guten Verträglichkeit, hohen Funktionalität und guten flexibilisierenden Eigenschaften wurden innerhalb von 24 h nicht-klebrige, flexible, zähe und klare Filme erhalten. Mit dem Allophanat 1 hingegen, erfolgte zwar eine sehr rasche Aushärtung, aber es wurden so spröde Filme erhalten , dass keine mechanischen Eigenschaften bestimmt werden konnten.

### Aushärteversuche

Die Prepolymere 1, 3 und 4 (Vergleichsbeispiel) wurden bei Raumtemperatur mit dem aminofunktionellen Polyasparaginsäureestern 1 gemischt, wobei ein NCO/NH Verhältnis von 1,05 : 1 eingehalten wurde. Nach dem Mischen wurden die klaren Zusammensetzungen schließlich zu 3 mm dicken Filmen gegossen. Die Zusammensetzung und das Aushärteverhalten der Filme sind in der Tabelle 2 zusammengefasst.

**Tabelle 2: Beispiele 7 bis 9**

| **Beispiele** | **7** | **8** | **9** |
|---|---|---|---|
| Polyasparaginsäureester 1 [g] | 18,4 | 7,4 | 9,2 |
| Prepolymer 1 [g] | 49,3 | - | |
| Prepolymer 3 [g] | - | 36,8 | |
| Prepolymer 4 [g] | | | 45,2 |
| NH:NCO | 1:1,05 | 1:1,05 | 1:1,05 |
| **Topfzeit [min]** | 35 | 60 | 150 |
| **Aushärtung (nach 24 h)** | ja | ja | nein |

Während die allophanatgruppenhaltigen Prepolymere 1 und 3 nach 24 h klare, flexible und klebfreie Filme ergaben, so zeigte das Prepolymer 4 (ohne Allophanatgruppen) keine vollständige Aushärtung (gleicher NCO-Gehalt wie Prepolymer 3).

## Patentansprüche

1. Zweikomponenten-Beschichtungssysteme, wenigstens enthaltend
A) ein über Allophanatgruppen gebundene Polyethergruppen aufweisendes Polyisocyanat-Prepolymer mit einem zahlenmittleren Molekulargewicht von 700 bis 50.000 g/mol, einer Viskosität bei 23°C von 500 bis 100.000 mPas, der allgemeinen Formel (II), 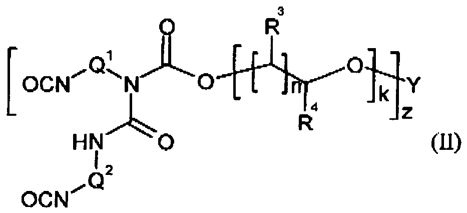 worin
Q¹ und Q² unabhängig voneinander der Rest eines linearen und/oder cyclischen aliphatischen Diisocyanats sind,
R³ und R⁴ unabhängig voneinander Wasserstoff oder ein C₁-C₄-Alkyfrest sind, wobei R³ und R⁴ bevorzugt Wasserstoff und/oder Methylgruppen sind und in jeder Wiederholungseinheit k die Bedeutung von R³ und R¹ verschieden sein kann,
Y der Rest eines Polyhydroxy-Starter-Moleküls einer Funktionalität von 2 bis 6, das mindestens ein Polyetherpolyol enthält, ist und somit
z eine Zahl von 2 bis 6 ist, welche bei Verwendung von verschiedenen Starter-Molekülen keine ganze Zahl sein muss, sowie
k bevorzugt so vielen Monomereinheiten entspricht, dass das zahlenmittlere Molekulargewicht des der Struktur zugrunde liegenden Polyethers 300 bis 20.000 g/mol beträgt und
m 1 oder 3 ist,
welche erhalten werden, indem
A1) ein oder mehrere aliphatische und/oder cycloaliphatische Polyisocyanate mit
A2) einer oder mehreren Polyhydroxyverbindungen, wobei wenigstens eine ein Polyetherpolyol ist,
zu einem NCO-funktionellen Polyurethan-Prepolymer umgesetzt werden und dessen so gebildete Urethangruppen dann anschließend unter Zugabe von
A3) Polyisocyanaten, welche verschieden von denen aus A1) sein können und
A4) Katalysatoren und
A5) gegebenenfalls Stabilisatoren
teilweise oder vollständig allophanatisiert werden,
und
B) aminofunktionellen Polyasparaginsäureester der allgemeinen Formel (I) 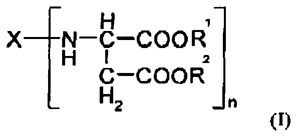 in der
X für einen n-wertigen organischen Rest steht, der durch Entfernung der primären Aminogruppen eines n-wertigen Polyamins erhalten wird,
R¹, R² für gleiche oder verschiedene organische Reste stehen, die unter den Reaktionsbedingungen gegenüber Isocyanatgruppen inert sind und
n für eine ganze Zahl von mindestens 2 steht.

2. Zweikomponenten-Beschichtungssysteme gemäß Anspruch 1, **dadurch gekennzeichnet, dass** bei der Herstellung der in A) eingesetzten Allophanate in den Komponenten A1) und A3) Hexandiisocyanat (Hexamethylendiisocyanat, HDI), 4,4'-Methylenbis(cyclohexylisocyanat) und/oder 3,5,5-Trimethyl-1-isocyanato-3-isocyanatomethylcyclohexan (Isophorondiisocyanate, IPDI) als Polyisocyanate eingesetzt werden.

3. Zweikompunenten-Beschichtungssysteme gemäß Anspruch 1, **dadurch gekennzeichnet, dass** in A1) und A3) Polyisocyanate vom gleichen Typ eingesetzt werden.

4. Zweikomponenten-Beschichtungssysteme gemäß einem der Ansprüche 1 bis 3, **dadurch gekennzeichnet, dass** zur Allophanatisierung als Katalysatoren A4) Zink(II)-Verbindungen eingesetzt werden.

5. Zweikomponenten-Beschichtungssysteme gemäß Anspruch 4, **dadurch gekennzeichnet, dass** als Zink(II)-Verbindungen Zink(II)bis(2-ethylhexanoat), Zn(II)bis(n-oktoat), Zn(II)bis(stearat) oder deren Mischungen verwendet werden.

6. Zweikomponenten-Beschichtungssysteme gemäß Ansprüchen 1 bis 5, **dadurch gekennzeichnet, dass** in A2) ausschließlich Polyetherpolyole eingesetzt werden, wobei diese zahlenmittlere Molekulargewichte Mₙ von 2.000 bis 6.000 g/mol, eine mittlere OII-Funktionalität von ≥ 1,95 und einen Grad an ungesättigten Endgruppen von kleiner oder gleich 0,01 meq/g nach ASTM D2849-69 aufweisen.

7. Zweikomponenten-Beschichtungssysteme gemäß Ansprüchen 1 bis 6, **dadurch gekennzeichnet, dass** das Molverhältnis der OH-Gruppen der Verbindungen der Komponente A2) zu den NCO-Gruppen der Polyisocyanate aus A1) und A3) 1 : 2 bis 1 : 10 beträgt.

8. Zweikomponenten-Beschichtungssysteme gemäß Ansprüchen 1 bis 7, **dadurch gekennzeichnet, dass** in A5) als Stabilisatoren anorganische oder organische Säuren, Säurehalogenide oder Ester eingesetzt werden.

9. Beschichtungen erhältlich aus Zweikomponenten-Beschichtungssystemen gemäß Ansprüchen 1 bis 8.

10. Substrate beschichtet mit Beschichtungen gemäß Anspruch 9.

## Claims

1. Two-component coating systems at least comprising
A) a polyisocyanate prepolymer having polyether groups attached via allophanate groups and having a number-average molecular weight of 700 to 50 000 g/mol and a viscosity at 23°C of 500 to 100 000 mPas, of the general formula (II), 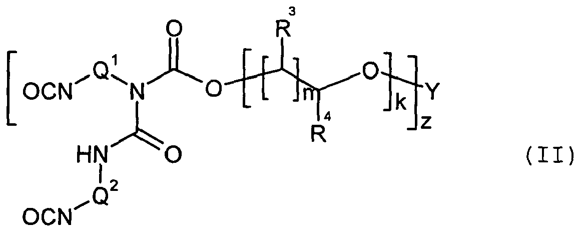 in which
Q¹ and Q² independently of one another are the radical of a linear and/or cyclic aliphatic diisocyanate,
R³ and R⁴ independently of one another are hydrogen or a C₁-C₄ alkyl radical, R³ and R⁴ being preferably hydrogen and/or methyl groups and it being possible in each repeating unit k for the definition of R³ and R⁴ to be different,
Y is the radical of a polyhydroxy starter molecule having a functionality of 2 to 6 and containing at least one polyether polyol, and hence
z is a number from 2 to 6, which in the case of the use of different starter molecules need not be a whole number, and also
k corresponds preferably to a number of monomer units sufficient for the number-average molecular weight of the polyether on which the structure is based to be 300 to 20 000 g/mol, and
m is 1 or 3,
which are obtained by reacting
A1) one or more aliphatic and/or cycloaliphatic polyisocyanates with
A2) one or more polyhydroxy compounds, at least one being a polyether polyol,
to give an NCO-functional polyurethane prepolymer and then subsequently subjecting its urethane groups thus formed to partial or complete allophanatization with addition of
A3) polyisocyanates, which can be different from those from A1), and
A4) catalysts and
A5) optionally stabilizers,
and
B) amino-functional polyaspartic esters of the general formula (I) 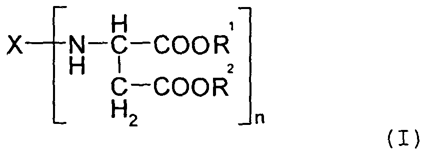 in which
X is an n-valent organic radical obtained by removing the primary amino groups of an n-valent polyamine,
R¹ and R² are identical or different organic radicals which are inert towards isocyanate groups under the reaction conditions and
n is a whole number of at least 2.

2. Two-component coating systems according to Claim 1, **characterized in that** the allophanates used in A) are prepared using, in components A1) and A3), hexane diisocyanate (hexamethylene diisocyanate, HDI), 4,4'-methylenebis(cyclohexyl isocyanate) and/or 3,5,5-trimethyl-1-isocyanato-3-isocyanatomethylcyclohexane (isophorone diisocyanate, IPDI) as polyisocyanates.

3. Two-component coating systems according to Claim 1, **characterized in that** polyisocyanates of the same type are used in A1) and A3).

4. Two-component coating systems according to any one of Claims 1 to 3, **characterized in that** zinc(II) compounds are used as catalysts A4) for the allophanatization.

5. Two-component coating systems according to Claim 4, **characterized in that** zinc(II) compounds used are zinc(II) bis(2-ethylhexanoate), zinc(II) bis(n-octoate), zinc(II) bis(stearate) or mixtures thereof.

6. Two-component coating systems according to Claims 1 to 5, **characterized in that** polyether polyols are used exclusively in A2), these polyols having number-average molecular weights Mₙ of 2000 to 6000 g/mol, an average OH functionality of ≥ 1.95 and a degree of unsaturated end groups of less than or equal to 0.01 meq/g in accordance with ASTM D2849-69.

7. Two-component coating systems according to Claims 1 to 6, **characterized in that** the molar ratio of the OH groups of the compounds of component A2) to the NCO- groups of the polyisocyanates from A1) and A3) is 1:2 to 1:10.

8. Two-component coating systems according to Claims 1 to 7, **characterized in that** stabilizers used in A5) are organic or inorganic acids, acid halides or esters.

9. Coatings obtainable from two-component coating systems according to Claims 1 to 8.

10. Substrates coated with coatings according to Claim 9.

## Revendications

1. Systèmes de revêtement à deux composants, contenant au moins
A) un prépolymère de polyisocyanate présentant des groupes polyéther liés via des groupes allophanate, présentant un poids moléculaire numérique moyen de 700 à 50 000 g/mole, une viscosité à 23°C de 500 à 100 000 mPa.s, de formule générale 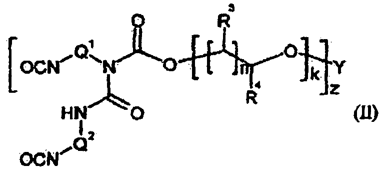 où
Q¹ et Q² représentent, indépendamment l'un de l'autre, le radical d'un diisocyanate aliphatique linéaire et/ou cyclique,
R³ et R⁴ représentent, indépendamment l'un de l'autre, hydrogène ou un radical C₁-C₄-alkyle, R³ et R⁴ représentant de préférence hydrogène et/ou des groupes méthyle et, dans chaque unité répétée k, la signification de R³ et R⁴ pouvant être différente,
Y représente le radical d'une molécule initiatrice polyhydroxy de fonctionnalité 2 à 6, qui contient au moins un polyétherpolyol, et donc
z représente un nombre de 2 à 6, qui, lors de l'utilisation de molécules initiatrices différentes, ne doit pas être un nombre entier, et
k correspond de préférence à un nombre d'unités monomères tel que le poids moléculaire numérique moyen du polyéther à la base de la structure vaut 300 à 20 000 g/mole et
m vaut 1 ou 3,
qui sont obtenus en ce qu'on transforme
A1) un ou plusieurs polyisocyanates aliphatiques et/ou cycloaliphatiques avec
A2) un ou plusieurs composés polyhydroxy, au moins un étant un polyétherpolyol,
en un prépolymère de polyuréthane à fonctionnalité NCO, et dont les groupes uréthane ainsi formés sont ensuite transformés partiellement ou complètement en allophanates par addition
A3) de polyisocyanates qui peuvent être différents de ceux de A1) et
A4) de catalyseurs et
A5) le cas échéant de stabilisateurs
et
B) des poly(esters de l'acide aspartique) à fonctionnalité amino de formule générale (I) 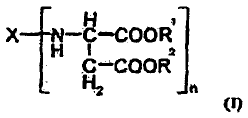 où
X représente un radical organique n-valent, qui est obtenu par élimination des groupes amino primaires d'une polyamine n-valente,
R¹, R² représentent des radicaux organiques identiques ou différents qui sont inertes par rapport aux groupes isocyanate dans les conditions de réaction et
n représente un nombre entier d'au moins 2.

2. Systèmes de revêtement à deux composants selon la revendication 1, **caractérisés en ce que** lors de la préparation des allophanates utilisés dans A), on utilise dans les composants A1) et A3), de l'hexanediisocyanate (hexaméthylènediisocyanate, HDI), du 4,4'-méthylènebis(cyclohexylisocyanate) et/ou du 3,5,5-triméthyl-1-isocyanato-3-isocyanatométhylcyclohexane (isophoronediisocyanate, IPDI) comme polyisocyanates.

3. Systèmes de revêtement à deux composants selon la revendication 1, **caractérisés en ce qu'**on utilise dans A1) et A3) des polyisocyanates d'un même type.

4. Systèmes de revêtement à deux composants selon l'une quelconque des revendications 1 à 3, **caractérisés en ce qu'**on utilise, pour la transformation en allophanates, comme catalyseurs A4), des composés de zinc (II).

5. Systèmes de revêtement à deux composants selon la revendication 4, **caractérisés en ce qu'**on utilise comme composés du zinc (II) du bis(2-éthylhexanoate) de zinc (II), du bis(n-octoate) de zinc (II), du bis(stéarate) de zinc (II) ou leurs mélanges.

6. Systèmes de revêtement à deux composants selon les revendications 1 à 5, **caractérisés en ce qu'**on n'utilise dans A2) que des polyétherpolyols, ceux-ci présentant des poids moléculaires numériques moyens Mₙ de 2000 à 6000 g/mole, une fonctionnalité OH moyenne ≥ 1,95 et un taux de groupes terminaux insaturés inférieur ou égal à 0,01 méq/g selon la norme ASTM D2849-69.

7. Systèmes de revêtement à deux composants selon les revendications 1 à 6, **caractérisés en ce que** le rapport molaire des groupes OH des composés du composant A2) aux groupes NCO des polyisocyanates de A1) et A3) est de 1:2 à 1:10.

8. Systèmes de revêtement à deux composants selon les revendications 1 à 7, **caractérisés en ce qu'**on utilise dans A5), comme stabilisateurs, des acides inorganiques ou organiques, des halogénures d'acides ou des esters.

9. Revêtements pouvant être obtenus à partir de systèmes de revêtement à deux composants selon les revendications 1 à 8.

10. Substrats revêtus par des revêtements selon la revendication 9.
